# FASCICULE DE BREVET EUROPEEN

(11) **EP 2 870 453 B1**
(45) Date de publication et mention de la délivrance du brevet: **18.03.2020**
(21) Numéro de dépôt: 13732987.6
(22) Date de dépôt: 03.07.2013
(51) Int. Cl.: G01N 3/12

(54) **SYSTÈME D'ANALYSE DE DÉFORMATION D'UN TUBE**
SYSTEM ZUR ANALYSE DER VERFORMUNG EINES ROHRS
SYSTEM FOR ANALYSING THE DEFORMATION OF A TUBE

(30) Priorité: 03.07.2012 FR 1256365
(43) Date de publication de la demande: 13.05.2015
(73) Titulaire: Commissariat à l'Énergie Atomique et aux Énergies Alternatives, 75015 Paris (FR)
(72) Inventeur: BONO, Matthew, F-78220 Viroflay (FR); CARASSOU, Sébastien, F-91470 Limours (FR)
(74) Mandataire: Regimbeau
(86) Numéro de dépôt international: PCT/EP2013/064068
(87) Numéro de publication internationale: WO 2014/006109

(56) Documents cités:
- EP-A1- 2 395 340
- FR-A1- 2 896 039
- US-A- 4 237 723
- "Data Base on the Behavior of High Burnup Fuel Rods with Zr-1%Nb Cladding and UO2 Fuel (VVER Type) under Reactivity Accident Conditions", , 1 juillet 1999 (1999-07-01), XP055059349, Washington, DC Extrait de l'Internet: URL:http://pbadupws.nrc.gov/docs/ML0614/ML 061450531.pdf [extrait le 2013-04-11]

## Description

### Domaine de l'invention

L'invention concerne le domaine des systèmes d'analyse de la déformation d'un tube soumis à une pression interne. Plus particulièrement, l'invention concerne le domaine des systèmes d'analyse de la déformation circonférentielle maximale admissible par le matériau d'une gaine de combustible d'un parc électronucléaire.

### État de la technique

Pour des raisons de sûreté, il est important de connaître le plus fidèlement possible les déformations circonférentielles maximales admissibles (ci-après déformations maximales) des matériaux de gaine de combustible utilisés dans un parc électronucléaire.

Ces gaines, de forme tubulaire, contiennent du combustible nucléaire et peuvent être soumises à des surpressions incidentelles ou accidentelles. Par la suite, ces gaines seront appelées indifféremment gaines ou tubes.

Afin de connaître ces déformations maximales, des méthodes mécaniques spécifiques sont réalisées en cellules blindées sur des tubes issus de réacteurs réels.

Il existe plusieurs méthodes pour évaluer les déformations maximales :
- Desquines et al., « The issue of stress state during mechanical tests to assess cladding performance during a reactivity-initiated accident (RIA) » (« Le problème de l'état de contrainte lors de tests mécaniques pour évaluer les performances des gaines à la suite d'un accident de réactivité »), in Journal of Nuclear Materials (Revue des matériaux nucléaires), 412 (2011), 250-267 ;
- Nuclear Energy Agency (Agence de l'énergie nucléaire), « Nuclear Fuel Behaviour Under Reactivity-initiated Accident (RIA) Conditions » (« Le comportement des combustibles nucléaires dans les conditions d'un accident de réactivité »), State-of-the-art Report (Rapport sur l'état de la technique), ISBN 978-92-64-99113-2, NEA/CSNI/R(2010)1 ;
- Le Saux et al., « Behavior and failure of uniformly hydrided Zircaloy-4 fuel claddings between 25°C and 480°C under various stress states, including RIA loading conditions » («Le comportement et la défaillance des gaines de combustible uniformément hybridées avec du Zircaloy-4 entre 25°C et 480°C sous divers états de contrainte, y compris dans des conditions d'accident de réactivité lors d'un chargement »), in Engineering Failure Analysis (Analyse ingénieur de défaillances), 17 (2010), 683-700 ;
- Cazalis et al., The PROMETRA Program (Le programme PROMETRA), « Fuel Cladding Mechanical Behavior Under High Strain Rate» (« Le comportement mécanique des gaines pour combustible sous forte contrainte »), Nuclear Technology, Vol. 157, mars 2007 ; et
- U.S. Nuclear Regulatory Commission (Commission de régulation nucléaire des États-Unis), « Data Base on the Behavior of High Burnup Fuel Rods with Zr-1%Nb Cladding and U02 Fuel (WER Type) under Reactivity Accident Conditions » (« Base de données sur le comportement des barres de combustible pour haute combustion nucléaire avec les gaines Zr-1%Nb et combustible U02 (type WER) dans des conditions d'accident de réativité »), Description of Test Procédures and Analytical Methods (Description de procédures de test et méthodes analytiques), NUREG/IA-0156, Vol. 2, IPSN 99/08-2, NSI RRC 2179, juillet 1999. Des autres systèmes d'analyse de déformation diamétrale d'un tube sont divulgués dans FR 2 896 039 A1, US 4 237 723 et EP 2 395 340 A1.

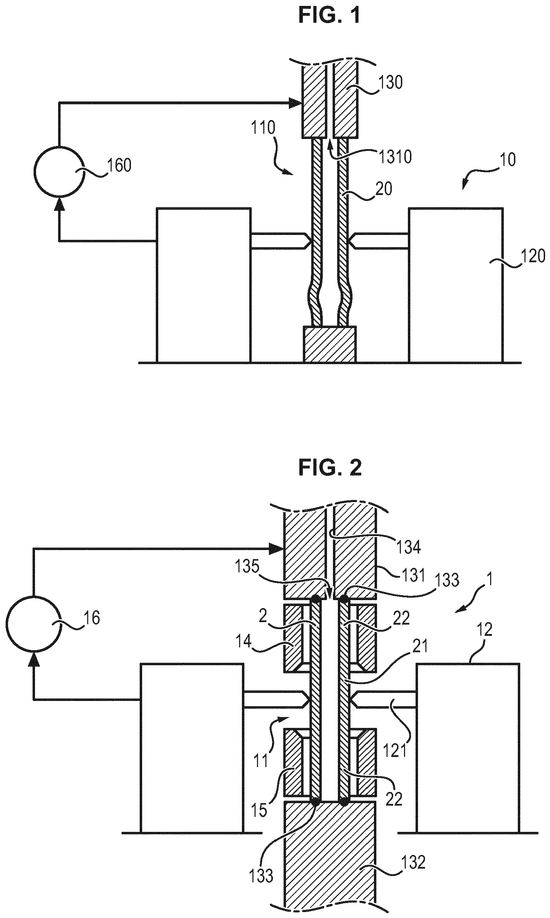

La méthode la plus couramment utilisée est la méthode d'éclatement (ou plus communément appelée « burst test » en anglais). Pour cela, on utilise un système d'analyse de déformation d'un tube (voir figure 1), comprenant un logement **110** pour la réception d'une gaine **20** sous forme d'un tube, un capteur diamétrale **120** pour suivre la déformation de la gaine **20,** et un injecteur de fluide **130** à l'intérieur de la gaine.

Une rampe de pression est appliquée à l'intérieur de la gaine **20** grâce à l'injection d'huile par l'injecteur de fluide **130,** la gaine **20** étant rendue étanche à l'exception d'un orifice d'injection **1310.** L'injection de l'huile est maintenue jusqu'à éclatement de la gaine **20.** L'injection, et donc la pression à l'intérieur de la gaine **20,** peut être éventuellement contrôlée grâce à une boucle de rétroaction **160** commandée par la mesure de la déformation de la gaine en forme de tube.

La déformation d'un tube pressurisé par un fluide commence avec une déformation élastique suivie d'une déformation plastique qui est dans un premier temps uniforme sur la longueur et sur la circonférence du tube. Après une certaine valeur de déformation uniforme plastique (appelé ci-après déformation nominale), la déformation du tube se localise et forme un « ballon » sur une position axiale déterminée. Ce ballonnement est ensuite suivi de la rupture du tube (éclatement).

Afin de reproduire une vitesse de déformation circonférentielle (ci-après vitesse de déformation) représentative des conditions accidentelles ou incidentelles, la pression du fluide injecté dans l'éprouvette est réglée en fonction de la mesure de déformation circonférentielle fournie par le capteur **120** généralement situé au milieu du tube par rapport à son axe longitudinal (mi-plan).

Or, le ballonnement ne se produit pas toujours, voire même rarement, à mi-plan du tube, et par conséquent la rupture du tube non plus. Le ballonnement et la rupture conséquente se produisent plutôt à une des extrémités du tube, si bien qu'ils ne sont pas détectés par le capteur situé à mi-plan du tube. Aussi, la déformation mesurée par le capteur est celle qui se trouve dans une zone de déformation uniforme, et n'est donc pas la déformation maximale du matériau du tube. La déformation maximale est alors fortement sous-estimée.

Ces méthodes sont utilisées communément pour étudier des tubes et permettent d'obtenir :
- des informations permettant de remonter à une loi de comportement du matériau (typiquement une courbe de contrainte en fonction de la déformation circonférentielle) dans le plan de mesure des capteurs diamétraux, le comportement du ballon n'est pas mesuré ; et
- une indication approximative de la déformation maximale du matériau (déformation à rupture).

En ce qui concerne ce dernier point, la précision avec laquelle la déformation maximale peut être déterminée est très limitée.

Il serait envisageable d'utiliser les déformations maximales obtenues dans le ballon après la rupture du tube. Cependant, les conditions qui ont régné au niveau du ballon (en particulier la vitesse de déformation au niveau du ballon, qui peut être de plusieurs ordres de grandeurs supérieure à celle présente dans la zone de déformation uniforme) lors de la déformation ne sont pas représentatives des conditions accidentelles ou incidentelles que l'on souhaite simuler. En outre, après la rupture, les lèvres de la fissure causée par l'éclatement sont écartées, rendant quasiment impossible la détermination de la valeur de la déformation juste avant rupture.

Pour ces raisons, ces méthodes n'utilisent que les valeurs de déformations obtenues par la mesure des capteurs, c'est-à-dire relatives à la zone où les conditions expérimentales sont maitrisées. Les données de déformations maximales ainsi obtenues sont donc très largement sous-estimées.

### Présentation

Un objectif de l'invention est de pallier au moins un des inconvénients de l'état de la technique présentés ci-dessus.

En particulier, un objectif de l'invention est de permettre la détermination de la déformation maximale du matériau du tube de manière plus pertinente que celle obtenue par les méthodes classiques.

Pour cela, l'invention propose un système d'analyse de déformation diamétrale d'un tube, comprenant un capteur pour suivre la déformation du tube, caractérisé en ce qu'il comprend en outre un limiteur de déformation pour délimiter à une zone du tube au droit du capteur l'étendue d'une déformation additionnelle du tube au-delà d'une déformation nominale.

Grâce à un tel système, il est possible de déterminer une déformation maximale mesurée qui soit la plus proche possible de la déformation circonférentielle maximale admissible du matériau du tube dans des conditions équivalentes à une incidence ou un accident de radioactivité.

Éventuellement, le système peut comprendre en outre un logement pour la réception du tube, et dans lequel le limiteur entoure partiellement le tube lorsque celui-ci est reçu dans le logement à l'exception de la zone du tube au droit du capteur.

Le limiteur peut comporter un anneau disposé de manière à entourer le tube quand celui-ci est reçu dans le logement.

L'anneau peut présenter un diamètre intérieur dimensionné de manière à ce que l'anneau demeure hors de contact du tube tant que celui-ci subit la déformation nominale.
Dans ce cas, l'anneau peut présenter un diamètre intérieur dimensionné de manière à ce que l'anneau entre en contact avec le tube dès que celui-ci subit la déformation additionnelle.

Le limiteur peut comporter un deuxième anneau disposé de manière à entourer le tube quand celui-ci est reçu dans le logement, l'anneau et le deuxième anneau étant espacés axialement l'un de l'autre par un espace découvrant la zone du tube au droit du capteur.

Le deuxième anneau peut présenter un diamètre intérieur dimensionné de manière à ce que le deuxième anneau demeure hors de contact du tube tant que celui-ci subit la déformation nominale. Dans ce cas, le deuxième anneau peut aussi présenter un diamètre intérieur dimensionné de manière à ce que le deuxième anneau entre en contact avec le tube dès que celui-ci subit la déformation additionnelle.

Le système peut encore comprendre en outre un générateur de pression à l'intérieur du tube pour générer la déformation nominale et/ou la déformation additionnelle. Dans ce cas, le générateur de pression est, par exemple, un injecteur de fluide sous pression comportant un orifice d'injection relié à l'intérieur du tube lorsque celui-ci est reçu dans le logement, le système comprenant en outre des joints pour étanchéifier les extrémités ouvertes du tube.

### Dessins

D'autres objectifs, avantages et caractéristiques apparaîtront à la lecture de la description détaillée qui suit, en référence aux dessins donnés à titre illustratif et non limitatif, parmi lesquels :
- la figure 1 est une représentation schématique d'un système d'analyse de déformation d'un tube de l'état de la technique avec un tube disposé dans un logement du système pour lequel un ballonnement et une rupture ont déjà été subis ;
- la figure 2 est une représentation schématique d'un système d'analyse de déformation d'un tube selon un mode de réalisation de l'invention avec un tube disposé dans un logement du système avant toute déformation ; et
- la figure 3 est une représentation schématique d'un système d'analyse de déformation d'un tube selon un mode de réalisation de l'invention avec un tube disposé dans un logement du système pour lequel un ballonnement s'est déjà produit.

### Description détaillée

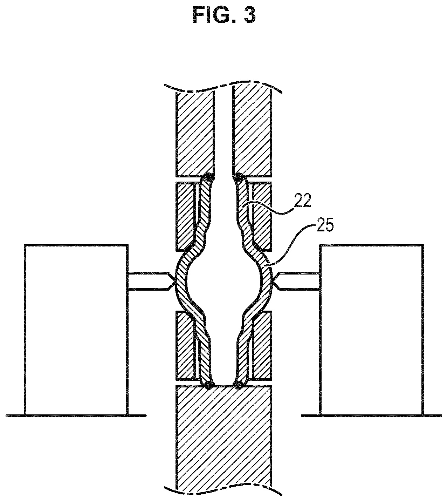

En référence aux figures 2 et 3, un système d'analyse de déformation diamétrale d'un tube est décrit ci-après.

Ce système **1** comprend un logement **11** pour la réception du tube **2** et un capteur **12** pour suivre la déformation du tube **2.** Le système **1** comprend en outre un limiteur **14, 15** de déformation pour délimiter l'étendue d'une déformation additionnelle du tube **2** au-delà d'une déformation nominale. Le limiteur **14, 15** délimite l'étendue à une zone de ballonnement **21** du tube au droit du capteur **12,** i.e. le capteur **12** réalise les mesures au niveau de la zone de ballonnement **21.**

La déformation nominale est définie comme la déformation plastique uniforme subie par le tube **2.** En d'autres termes, la déformation nominale désigne la déformation subie par le tube **2** qui est la même le long de l'axe longitudinal du tube **2** et autour de sa circonférence.

La déformation additionnelle est définie comme la déformation plastique subie par le tube **2** lors de la formation d'un ballon **25** (ballonnement) à un endroit localisé du tube **2** le long de son axe longitudinal. La déformation additionnelle aboutit à l'éclatement du ballon **25.** La déformation additionnelle juste avant l'éclatement est la déformation circonférentielle maximale admissible (ci-après déformation maximale) par le matériau du tube.

Ainsi, le ballonnement est provoqué dans une zone (la zone de ballonnement **21**) où la mesure des déformations est réalisée, permettant à la fois une mesure *in situ* des déformations dans le ballon **25** et un contrôle des conditions expérimentales lors du ballonnement, par exemple la vitesse de déformation, afin que ces conditions expérimentales puissent demeurer représentatives des conditions accidentelles ou incidentelles. Le ballon **25** ne se forme pas toujours spontanément dans la zone de ballonnement **21.** Auquel cas, du fait de la présence du limiteur **14, 15,** le ballon **25,** juste après sa formation, se propage le long du tube **2** jusqu'à la zone de ballonnement **21** avant de croître.

Par conséquent, les mesures obtenues avec ce système **1** sont plus pertinentes que les mesures obtenues habituellement. En effet, la pertinence des mesures est liée au fait que la rupture se produit dans une zone située au droit du capteur **12,** contrairement aux systèmes de la technique antérieure. En outre, les mesures sont plus représentatives des conditions accidentelles ou incidentelles car la vitesse de déformation peut être réglée de manière à être constante dans le ballon **25** lors de sa formation, ce qui n'est pas le cas quand les ballons se forment dans une zone du tube éloignée des capteurs. En effet, la vitesse de déformation est asservie sur la déformation-même du tube **2.** Lorsque cette déformation est mesurée dans la zone de déformation uniforme **22** et non dans la zone de ballonnement **21,** le système utilisé a tendance à faire évoluer la vitesse plus rapidement que nécessaire, faussant ainsi les mesures.

Par ailleurs, il devient possible avec un même système, de mesurer les déformations élastiques et plastiques, ainsi que la déformation maximale.

En effet, avec le présent système **1,** il est possible de prolonger au-delà de la déformation nominale la collecte d'informations relatives à une loi de comportement du matériau du tube **2** contrairement à un système conventionnel. Cela est dû à la possibilité de suivre la formation du ballon **25** et son accroissement jusqu'à éclatement.

Enfin, les mesures s'effectuent sur des matériaux irradiés, c'est pourquoi elles sont réalisées dans des cellules blindées. L'équipement de ces cellules est difficilement modifiable. Le présent système **1** assure la compatibilité avec l'équipement actuel.

Le capteur **12** peut comprendre une ou plusieurs sondes de mesure diamétrale

Une sonde de mesure diamétrale comporte un doigt mobile **121** en contact avec le tube à mesurer. L'appui du doigt mobile **121** sur le tube **2** lorsque celui-ci est reçu dans le logement **11** est forcé par un ressort ou un contrepoids. Au fur et à mesure que le diamètre du tube **2** s'élargit à cause de la déformation, le tube **2** déplace le doigt mobile **121.** Le déplacement du doigt mobile **121** constitue alors la mesure de la déformation.

D'autres moyens de mesure, avec ou sans contact avec le tube 2, tels que des capteurs laser, peuvent-être utilisés.

Le limiteur **14, 15** peut être conçu de manière à entourer partiellement le tube **2** lorsque celui-ci est reçu dans le logement **11** à l'exception de la zone de ballonnement **21.**

Par exemple, le limiteur **14, 15** comporte un anneau **14** disposé de manière à entourer le tube **2** quand celui-ci est reçu dans le logement **11.** L'anneau **14** peut alors présenter un diamètre intérieur dimensionné de manière à ce que l'anneau **14** demeure hors de contact du tube **2** tant que le tube **2** subit la déformation nominale. La dimension du diamètre intérieur de l'anneau **14** peut être définie au préalable par un premier test correspondant à la méthode de l'état de la technique décrite ci-dessus, c'est-à-dire sans le limiteur. La dimension du diamètre intérieur de l'anneau **14** devra alors être supérieure au diamètre extérieur de la zone **22** du tube **2** déformée, mais dans laquelle aucun ballon ne s'est formé (c'est-à-dire que cette zone n'a subi que la déformation nominale). La dimension du diamètre intérieur de l'anneau **14** devra être inférieure au diamètre extérieur maximal du tube **2** déformé juste avant l'éclatement. De préférence, le diamètre intérieur de l'anneau **14** est égal au diamètre extérieur de la zone **22** du tube **2** déformée augmenté de la tolérance d'usinage de l'anneau **14.** La dimension peut encore être calculée à partir des caractéristiques physiques du matériau du tube **2.**

Le diamètre intérieur de l'anneau **14** peut encore être dimensionné de manière à ce que l'anneau **14** entre en contact avec le tube **2** dès que celui-ci subit la déformation additionnelle. Dans ce cas, le diamètre intérieur de l'anneau **14** doit être égal au diamètre extérieur de la zone **22** du tube déformée, mais dans laquelle aucun ballon ne s'est formé (c'est-à-dire que cette zone n'a subi que la déformation nominale).

En variante, le limiteur **14, 15** peut comporter un deuxième anneau **15** disposé de manière à entourer le tube **2** quand celui-ci est reçu dans le logement **11,** l'anneau **14** et le deuxième anneau **15** étant espacés longitudinalement l'un de l'autre par rapport au tube **2** par un espace découvrant la zone de ballonnement **21.** Tout comme l'anneau **14,** le deuxième anneau **15** peut présenter un diamètre intérieur dimensionné de manière à ce que le deuxième anneau **15** demeure hors de contact du tube **2** tant que celui-ci subit la déformation nominale. Aussi, le diamètre intérieur du deuxième anneau **15** peut être dimensionné de manière à ce que le deuxième anneau **15** entre en contact avec le tube **2** dès que celui-ci subit la déformation additionnelle. Dans tous les cas, l'étendue longitudinale par rapport au tube **2** de la zone de ballonnement **21** peut être de préférence choisie de manière à ce qu'un ballon **25** pouvant s'y former présente une étendue longitudinale environ égale à l'étendue longitudinale d'un ballon se formant dans les systèmes conventionnels, c'est-à-dire sans limiteur. Cette étendue peut être déterminée lors du premier test décrit plus haut. La longueur du ballon sur le tube éclaté est alors égale à l'étendue longitudinale de la zone de ballonnement **21.** Dans le cas où deux anneaux **14, 15** sont prévus, ces deux anneaux **14, 15** sont alors espacés longitudinalement par rapport au tube de la longueur du ballon sur le tube éclaté.

Afin de générer la déformation nominale et la déformation additionnelle, le système **1** peut comprendre en outre un générateur de pression **134.** Ce générateur de pression **134** permet de faire varier la pression à l'intérieur du tube **2.**

Le générateur de pression **134** peut être un injecteur de fluide sous pression comportant un orifice d'injection **135** relié à l'intérieur du tube **2** lorsque celui-ci est reçu dans le logement **11.** Des joints **133** sont alors pourvus afin d'étanchéifier les extrémités ouvertes du tube **2.**

Afin de régler la vitesse de déformation du tube **2,** un régulateur **16** peut être prévu dans le système **1.** Ce régulateur **16** est par exemple un calculateur utilisant les mesures du capteur pour commander le débit de l'injecteur de fluide **134.**

Par exemple, le système **1** comprend un bâti comportant une première partie **131** et une deuxième partie **132,** le logement **11** du tube étant partagé entre la première partie **131** et la deuxième partie **132.** La première partie **131** présente une fixation pour la fixation d'une première extrémité du tube **2.** La première partie **131** présente aussi un joint **133** pour étanchéifier la première extrémité du tube **2.** En outre, la première partie **131** présente un orifice **135** faisant orifice d'injection de l'injecteur de fluide **134** intégré à la première partie **131.** La deuxième partie **132** présente une fixation pour la fixation d'une deuxième extrémité du tube **2** à un vérin pouvant se déplacer axialement par rapport au tube **2** afin de contrôler la déformation axiale moyenne du tube **2,** ou également afin de contrôler la contrainte dans la direction axiale du tube **2** et un joint **133** pour étanchéifier la deuxième extrémité du tube **2.** En variante, la deuxième extrémité du tube **2** est bouchée ou fermée, par exemple par un joint ou un raccord soudé. Ainsi, lorsque du fluide est injecté à l'intérieur du tube **2** via l'injecteur de fluide **134,** le fluide, ne pouvant s'échapper, fait monter la pression au sein du tube **2.** L'augmentation de pression est surveillée grâce au régulateur **16** pour que la vitesse de déformation du tube **2,** et notamment au niveau du ballon **25** corresponde aux conditions accidentelles ou incidentelles. Le régulateur **16** commande l'injection du fluide jusqu'à éclatement du tube **2.**

## Revendications

1. Système (1) d'analyse de déformation diamétrale d'un tube (2), comprenant un capteur (12) pour suivre la déformation du tube (2),
**caractérisé en ce qu'**il comprend en outre un limiteur (14, 15) de déformation pour délimiter à une zone (21) du tube au droit du capteur (12) l'étendue d'une déformation additionnelle du tube (2) au-delà d'une déformation nominale.

2. Système (1) selon la revendication 1, comprenant en outre un logement (11) pour la réception du tube (2), et dans lequel le limiteur (14, 15) entoure partiellement le tube (2) lorsque celui-ci est reçu dans le logement (11) à l'exception de la zone (21) du tube au droit du capteur.

3. Système (1) selon la revendication 2, dans lequel le limiteur (14, 15) comporte un anneau (14) disposé de manière à entourer le tube (2) quand celui-ci est reçu dans le logement (11).

4. Système (1) selon la revendication 3, dans lequel l'anneau (14) présente un diamètre intérieur dimensionné de manière à ce que l'anneau (14) demeure hors de contact du tube (2) tant que celui-ci subit la déformation nominale.

5. Système (1) selon la revendication 4, dans lequel l'anneau (14) présente un diamètre intérieur dimensionné de manière à ce que l'anneau (14) entre en contact avec le tube (2) dès que celui-ci subit la déformation additionnelle.

6. Système (1) selon l'une des revendications 3 à 5, dans lequel le limiteur (14, 15) comporte un deuxième anneau (15) disposé de manière à entourer le tube (2) quand celui-ci est reçu dans le logement (11), l'anneau (14) et le deuxième anneau (15) étant espacés axialement l'un de l'autre par un espace découvrant la zone (21) du tube (2) au droit du capteur (12).

7. Système (1) selon la revendication 6, dans lequel le deuxième anneau (15) présente un diamètre intérieur dimensionné de manière à ce que le deuxième anneau (15) demeure hors de contact du tube (2) tant que celui-ci subit la déformation nominale.

8. Système (1) selon la revendication 7, dans lequel le deuxième anneau (15) présente un diamètre intérieur dimensionné de manière à ce que le deuxième anneau (15) entre en contact avec le tube (2) dès que celui-ci subit la déformation additionnelle.

9. Système (1) selon l'une des revendications 1 à 8, comprenant en outre un générateur de pression (134) à l'intérieur du tube (2) pour générer la déformation nominale et/ou la déformation additionnelle.

10. Système (1) selon la revendication 9, dans lequel le générateur de pression (134) est un injecteur de fluide sous pression comportant un orifice d'injection (135) relié à l'intérieur du tube (2) lorsque celui-ci est reçu dans le logement (11), le système (1) comprenant en outre des joints (133) pour étanchéifier les extrémités ouvertes du tube (2).

## Patentansprüche

1. System (1) zur Analyse der Durchmesserverformung eines Rohres (2) mit einem Sensor (12) zur Verfolgung der Verformung des Rohres (2),
**dadurch gekennzeichnet, dass** es ferner einen Begrenzer (14, 15) der Verformung umfasst, um das Ausmaß einer zusätzlichen Verformung des Rohres (2) über eine nominale Verformung hinaus auf einen Bereich (21) des Rohres auf Höhe des Sensors (12) zu begrenzen.

2. System (1) nach Anspruch 1 ferner umfassend eine Aufnahme (11) zur Aufnahme des Rohres (2) und wobei der Begrenzer (14, 15) das Rohr (2) teilweise umgibt, wenn dieses in der Aufnahme (11) aufgenommen ist, mit Ausnahme des Bereichs (21) des Rohres auf Höhe des Sensors.

3. System (1) nach Anspruch 2, wobei der Begrenzer (14, 15) einen Ring (14) aufweist, der derart angeordnet ist, dass er das Rohr (2) umgibt, wenn dieses in der Aufnahme (11) aufgenommen ist.

4. System (1) nach Anspruch 3, wobei der Ring (14) einen Innendurchmesser aufweist, der derart bemessen ist, dass der Ring (14) nicht mit dem Rohr (2) in Berührung kommt, wenn dieses der nominalen Verformung unterliegt.

5. System (1) nach Anspruch 4, wobei der Ring (14) einen Innendurchmesser aufweist, der derart bemessen ist, dass der Ring (14) mit dem Rohr (2) in Berührung kommt, wenn dieses der zusätzlichen Verformung unterliegt.

6. System (1) nach einem der Ansprüche 3 bis 5, wobei der Begrenzer (14, 15) einen zweiten Ring (15) aufweist, der derart angeordnet ist, dass er das Rohr (2) umgibt, wenn dieses in der Aufnahme (11) aufgenommen ist, wobei der Ring (14) und der zweite Ring (15) durch einen Spalt in axialer Richtung voneinander beabstandet sind, der den Bereich (21) des Rohrs (2) auf Höhe des Sensors (12) freilegt.

7. System (1) nach Anspruch 6, wobei der zweite Ring (15) einen Innendurchmesser aufweist, der derart bemessen ist, dass der zweite Ring (15) nicht mit dem Rohr (2) in Berührung kommt, wenn dieses der nominalen Verformung unterliegt.

8. System (1) nach Anspruch 7, wobei der zweite Ring (15) einen Innendurchmesser aufweist, der derart bemessen ist, dass der zweite Ring (15) mit dem Rohr (2) in Berührung kommt, wenn dieses der zusätzlichen Verformung unterliegt.

9. System (1) nach einem der Ansprüche 1 bis 8, das ferner einen Druckerzeuger (134) im Inneren des Rohres (2) für die Erzeugung der nominalen Verformung und/oder der zusätzlichen Verformung umfasst.

10. System (1) nach Anspruch 9, wobei der Druckerzeuger (134) ein Einspritzer von unter Druck stehendem Fluid ist, der eine Einspritzöffnung (135) umfasst, die mit dem Inneren des Rohres (2) verbunden ist, wenn dieses in der Aufnahme (11) aufgenommen ist, wobei das System (1) ferner Dichtungen (133) zum Abdichten der offenen Enden des Rohres (2) umfasst.

## Claims

1. A system (1) for analyzing a diametrical deformation of a tube (2), comprising a sensor (12) for following the deformation of the tube (2),
**characterized in that** it further comprises a deformation limiter (14, 15) to delimit at an area (21) of the tube in line with the sensor (12) the extent of an additional deformation of the tube (2) beyond a nominal deformation.

2. The system (1) according to claim 1, further comprising a housing (11) for accommodating the tube (2), and wherein the limiter (14, 15) partially surrounds the tube (2) when the latter is accommodated in the housing (11) with the exception of the area (21) of the tube in line with the sensor.

3. The system (1) according to claim 2, wherein the limiter (14, 15) includes a ring (14) disposed so as to surround the tube (2) when the latter is accommodated in the housing (11).

4. The system (1) according to claim 3, wherein the ring (14) has an internal diameter dimensioned such that the ring (14) remains out of contact with the tube (2) as long as the latter undergoes the nominal deformation.

5. The system (1) according to claim 4, wherein the ring (14) has an internal diameter dimensioned such that the ring (14) comes into contact with the tube (2) as soon as the latter undergoes the additional deformation.

6. The system (1) according to any of claims 3 to 5, wherein the limiter (14, 15) includes a second ring (15) disposed so as to surround the tube (2) when the latter is accommodated in the housing (11), the ring (14) and the second ring (15) being axially spaced from each other by a space uncovering the area (21) of the tube (2) in line with the sensor (12).

7. The system (1) according to claim 6, wherein the second ring (15) has an internal diameter dimensioned such that the second ring (15) remains out of contact with the tube (2) as long as the latter undergoes the nominal deformation.

8. The system (1) according to claim 7, wherein the second ring (15) has an internal diameter dimensioned such that the second ring (15) comes into contact with the tube (2) as soon as the latter undergoes the additional deformation.

9. The system (1) according to any of claims 1 to 8, further comprising a pressure generator (134) inside the tube (2) to generate the nominal deformation and/or the additional deformation.

10. The system (1) according to claim 9, wherein the pressure generator (134) is a pressurized fluid injector including an injection orifice (135) connected to the inside of the tube (2) when the latter is accommodated in the housing (11), the system (1) further comprising seals (133) for sealing the open ends of the tube (2).
